# EUROPEAN PATENT APPLICATION

(11) **EP 2 079 191 A2**
(43) Date of publication of application: **15.07.2009**
(21) Application number: 08251699.8
(22) Date of filing: 14.05.2008
(51) Int. Cl.: H04L 12/26, H04L 29/06, H04M 3/22

(54) **Method and system for direct data recording**

(30) Priority: 09.01.2008 US 19901
(71) Applicant: Verint Systems Inc., Santa Clara, CA 95054 (US)
(72) Inventor: Ran Achtuv, Hod Hasharon 45373 (IL); Shai Levi, Hod Hasharon 45295 (IR)
(74) Representative: Bibby, William Mark

(57) **Abstract**

A computer-implemented method for data recording includes defining a rule, the rule identifying data items exchanged between an originating endpoint and a recipient endpoint over a communication network, having nodes, as target data items for storage by a storage device. The storage device has a communication address. A node of the communication network is configured with the rule and with the communication address of the storage device. The rule causes the node to recognize the target data items while forwarding the data items between the originating and recipient endpoints and to forward respective copies of the recognized target data items to the communication address of the storage device.

## Description

### FIELD OF THE DISCLOSURE

The present disclosure relates generally to data storage, and particularly to methods and systems for recording data exchanged over Internet Protocol (IP) networks.

### BACKGROUND OF THE DISCLOSURE

Various systems and applications record data that is communicated over communication networks for subsequent use. For example, contact center applications sometimes record customer interaction sessions for use in performance monitoring or dispute resolution. Some intelligence and government applications record data that is intercepted from communication networks, and carry out various tracking and analysis tasks using the recorded data. Video surveillance applications sometimes record the video produced by surveillance cameras for subsequent analysis or as evidence.

In some known data recording systems, the data intended for storage is first sent from the communication network to a recording system. The recording system caches, filters or otherwise pre-processes the data, potentially stores it in one or more temporary storage locations, and then forwards it to one or more storage systems for long term storage.

### SUMMARY OF THE DISCLOSURE

Embodiments of the present invention provide a computer-implemented method for data recording, the method including:
defining a rule, said rule identifying data items exchanged between an originating endpoint and a recipient endpoint over a communication network, having nodes, as target data items for storage by a storage device, said storage device having a communication address; and
configuring a node of said communication network with said rule and with said communication address of said storage device, wherein said rule causes said node to recognize said target data items while forwarding said data items between said originating and recipient endpoints and to forward respective copies of said recognized target data items to said communication address of said storage device.

In some embodiments, said communication network includes an Internet Protocol (IP) network. In an embodiment, configuring said node includes communicating with said node over a first communication path in said communication network, and said rule causes said node to forward said copies of said recognized target data items to said storage device over a second communication path in said communication network, different from said first communication path.

In a disclosed embodiment, said node includes said originating endpoint. Alternatively, said node includes a switch. In another embodiment, said rule operates on at least one information type selected from a group of types consisting of data content conveyed by said data items, metadata conveyed by said data items and a behavioral characteristic of said data items. In yet another embodiment, the method includes storing said forwarded copies of said target data items in said storage device. Storing said forwarded copies may include storing said copies in said storage device having the communication address without further forwarding said copies to another communication address.

In still another embodiment, configuring said node includes causing said node to forward said copies without further processing of said copies by another node. Configuring said node may include causing said node to forward said copies to said storage device using a media transfer protocol. Configuring said node may include causing said node to filter said data items exchanged between said originating and recipient endpoints using said rule to identify said target data items. Said node may filter said target data items substantially in real-time.

In some embodiments, configuring said node includes causing said node to copy said recognized target data items to produce said respective copies. Configuring said node may include causing said node to copy a portion of said recognized target data items.

There is additionally provided, in accordance with an embodiment of the present invention, apparatus for data recording, including:
a network interface, which is arranged to communicate with a communication network; and
a processor, which is coupled to accept a definition of a rule, said rule identifying data items exchanged between an originating endpoint and a recipient endpoint over said communication network, having nodes, as target data items for storage by a storage device, said storage device having a communication address, and to configure a node of said communication network with said rule and with said communication address of said storage device, wherein said rule causes said node to recognize said target data items while forwarding said data items between said originating and recipient endpoints and to forward respective copies of said recognized target data items to said communication address of said storage device.

There is also provided, in accordance with an embodiment of the present invention, a system for data recording, including:
a storage device, which has a communication address and is coupled to receive copies of target data items that are exchanged over a communication network and to store said received copies; and
a Recording Control System (RCS), which is coupled to accept a definition of a rule, said rule identifying data items exchanged between an originating endpoint and a recipient endpoint over said communication network, having nodes, as target data items for storage by said storage device, and to configure a node of said communication network with said rule and with said communication address of said storage device, wherein said rule causes said node to recognize said target data items while forwarding said data items between said originating and recipient endpoints and to forward respective copies of said recognized target data items to said communication address of said storage device.

In an embodiment, said RCS is further coupled to store information regarding said stored copies, and to initiate a retrieval of said stored copies from said storage device based on said information.

The present disclosure will be more fully understood from the following detailed description of the embodiments thereof, taken together with the drawings in which:

### BRIEF DESCRIPTION OF THE DRAWINGS

Figs. 1 and 2 are block diagrams that schematically illustrate systems for data recording, in accordance with embodiments of the present disclosure; and
Fig. 3 is a flow chart that schematically illustrates a method for data recording, in accordance with an embodiment of the present disclosure.

### DETAILED DESCRIPTION OF EMBODIMENTS

### OVERVIEW

Embodiments of the present disclosure provide improved methods and systems for data recording. In some embodiments, communication nodes (referred to herein as endpoints) exchange data with one another over a communication network, such as an Internet Protocol (IP) network. A storage system is connected to the network, in order to store some of the data that is of interest. A Recording Control System (RCS), which is also connected to the network, controls the data recording process.

The RCS defines rules, which identify target data items (e.g., data packets) that are of interest and should therefore be stored by the storage system. The RCS configures elements of the network to identify the target data items and to forward copies of these data items directly to the storage system. In some embodiments, the RCS configures a switch in the network with the rules, as well as with a communication address of the storage system. The configuration causes the switch to recognize the target data items and to forward copies of these items to the storage system. Alternatively, the RCS may configure the endpoints themselves with the rules and with the communication address of the storage system, so that the endpoints are able to recognize, copy and forward the target data items independently of any switching infrastructure.

As noted above, in some known data recording systems the data is first sent from the network to a recording system, which processes the data and caches it in one or more temporary storage locations, and then forwards it to the storage system for long-term storage. The recording system is often a complex and expensive platform, which supports large data bandwidths and provides various resilience and redundancy features. Unlike these known methods and systems, the methods and systems described herein forward copies of the target data items directly from the communication network to the storage system, without passing through any kind of intermediary recording system or otherwise processing the data other than in the storage system. The complex and expensive recording system, and in particular its redundancy functions, can thus be eliminated. The methods and systems described herein also eliminate the need to store the data in multiple short-term or long-term storage locations. Since the RCS performs only control functions and does not process the target data items, its size, cost and complexity are significantly smaller in comparison with known recording systems. The methods and systems described herein make use of the redundancy and resiliency features that are already provided by the IP network elements and by the storage system.

The methods and systems described herein effectively separate signaling information from data content, so that only control information and not the actual media passes through the RCS. Signaling (e.g., configuration of the switch or endpoints by the RCS, control of the endpoints by the switch) is carried out over a certain communication path. The media (i.e., copies of the identified target data items) traverses a different communication path, which does not pass through the RCS. Thus, the methods and systems described herein simplify the routing of data items via the IP network and use less network resources in comparison with known methods.

Although the embodiments described herein mainly address recording of data items in IP networks, the principles of the present invention can be used in a wide variety of network types and applications.

### SYSTEM DESCRIPTION

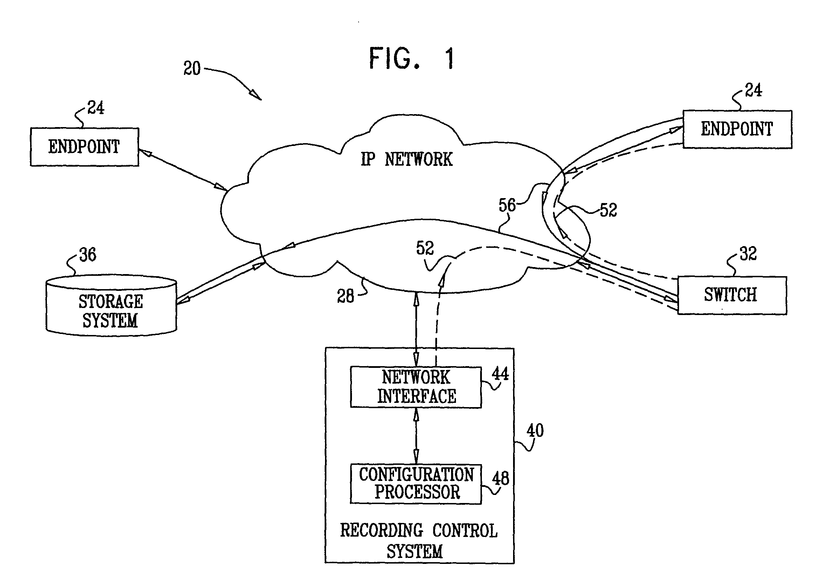

Fig. 1 is a block diagram that schematically illustrates a system 20 for data recording, in accordance with an embodiment of the present disclosure. In system 20, endpoints 24 communicate with one another by exchanging data items over a communication network, such as an Internet Protocol (IP) network 28. For a given data item, the source of the data item is referred to as an originating endpoint, and the destination of the data item is referred to as a recipient endpoint.

Endpoints 24 may comprise personal computers, fixed or mobile phones, Personal Digital Assistants (PDAs), and/or any other suitable type of computing or communication terminals capable of IP communication. Network 28 may comprise a Wide Area Network (WAN) such as the Internet, a Metropolitan Area Network (MAN), a Local Area Network (LAN), a wireless network such as a cellular network, a wireline telephone network or any other suitable type of IP network or combination of networks. Network 28 may comprise a public network, a private network operated by a certain enterprise, or a combination of public and private networks. The data items (typically data packets) exchanged among endpoints 24 may comprise any type of media, such as voice, data and/or video, and may conform to any suitable communication standard.

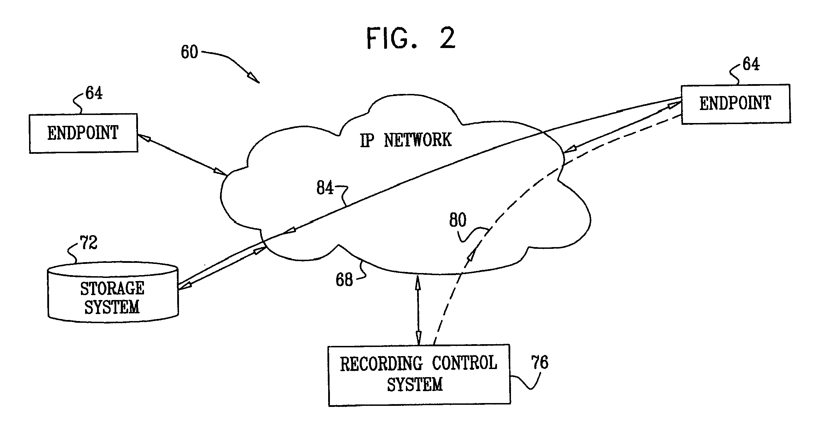

In the exemplary embodiment of Fig. 1, endpoints 24 communicate via a switch 32, which routes the data packets to their appropriate destinations. Switch 32 may also carry out other switching functions known in the art. In the context of the present patent application and in the claims, the term "switch" refers to any network element that is capable of performing packet switching operations, such as various types of switches, bridges and routers. Some switches, such as telephony switches, handle both content transfer and session management. Although Fig. 1 shows two endpoints and a single switch, system 20 often comprises a large number of endpoints, and may comprise multiple switches. (An alternative configuration that does not involve switching elements is shown in Fig. 2 further below.)

The methods and systems described herein can be used in a variety of applications. For example, system 20 may comprise an enterprise contact center, using which service agents interact with customers. In such an application, some of the endpoints comprise customer terminals and other endpoints comprise service agent workstations. As another example, system 20 may be used in an intelligence application, which records data that is exchanged over the Internet or over a public telephone network. As yet another example, system 20 may comprise a video surveillance system, in which the endpoints comprise IP video cameras or other sensors.

System 20 comprises a storage system 36, for storing some of the data items that are exchanged among endpoints 24. Storage system 36 may comprise one or more storage devices, such as disks, tapes or any other suitable type of storage media. In many applications, storage system 36 comprises a large and complex enterprise storage system, which provides various redundancy, disaster recovery and other resilience features.

System 20 further comprises a Recording Control System (RCS) 40, which controls the data recording process. RCS 40 comprises a network interface 44, which connects the RCS with network 28, and a configuration processor 48, which carries out the recording control functions described herein. Typically, processor 48 comprises a general-purpose computer, which is programmed in software to carry out the functions described herein. The software may be downloaded to the computer in electronic form, over a network, for example, or it may alternatively be supplied to the computer on tangible media, such as CD-ROM.

RCS 40 controls and configures elements of IP network 28, so that data items that are of interest are forwarded from the network directly to storage system 36. These data items are referred to herein as target data items. In some embodiments, configuration processor 48 accepts a rule, which identifies the target data items. In other words, if a certain data item matches the rule, it should be forwarded to storage system 36 for storage. The rule may be predefined, or it may be provided to processor 48 by a user using any suitable format and input means. In the context of the present patent application and in the claims, the term "rule" is used to describe any mechanism that operates on data items and produces decisions as to whether or not to forward the data items for storage. Various mechanisms, such as Boolean conditions, regular expressions, state machines, tables, functions and many others can be used to implement rules. The processor may use any number of rules to identify the target data items.

Processor 48 may use a wide variety of rule types. The rules may consider the media content of the data items, metadata carried by the data items and/or behavioral characteristics of the data items. For example, a rule may specify that a data item containing a certain word or phrase, a data item originating from a certain IP address or phone number, a data item destined to a certain e-mail address, a data item that is larger than a certain size, a data item that originates from a certain entity, customer or agent, and/or a data item that originates or is destined to a certain geographical area should be stored. Various other types of rules will be apparent to those skilled in the art, and any such rules can be used by processor 48. Generally, a rule may be based on information provided by multiple sources, e.g., any desired set of switches and/or endpoints.

Processor 48 configures switch 32 with the rule. In addition, processor 48 provides switch 32 with a communication address (e.g., IP address, domain name, qualified name or any other unique identifier) of storage system 36. Switch 32 uses this information to recognize the target data items and forward copies of these items directly to the storage system. When processing data items, switch 32 applies the rule to the data items it processes. If the switch identifies a data item that matches the rule, it forwards a copy of this data item to the communication address of the storage system. The storage system receives the forwarded copy of the target data item and stores it.

In alternative embodiments, when switch 32 establishes communication between two endpoints, the switch forwards information regarding the newly-established communication to the RCS. Using this information, the RCS determines whether the communicated data items are considered target data items, and may initiate a request for forwarding the data items to the storage system.

Fig. 1 shows the different communication paths used for signaling information and media transfer, for a certain exemplary endpoint. The signaling process (configuring of the switch by the RCS, signaling communication between the endpoint and the switch) is performed over a signaling path 52. The media transfer (forwarding the copies of the target data items) is carried out over a media path 56, which is different from signaling path 52 and does not pass through RCS 40. Thus, the RCS handles only control information and is not involved in media transfer. The media is transferred directly from the endpoint to the storage system.

In some embodiments, the endpoints communicate via the switch only when establishing communication. After communication is established, the two endpoints forward content directly to one another.

Fig. 2 is a block diagram that schematically illustrates a system 60 for data recording, in accordance with an alternative embodiment of the present disclosure. Similarly to system 20 of Fig. 1 above, system 60 comprises endpoints 64 that communicate over an IP network 68, a storage system 72 and an RCS 76. Unlike the configuration of Fig. 1, however, system 60 does not use switching elements. Instead, each endpoint 64 sends the data items it produces to a communication address of the appropriate destination. Such configurations are common, for example, in video surveillance applications, in which each video camera or sensor sends its output to the appropriate destination.

In system configurations that do not use centralized switching elements, RCS 76 may configure endpoints 64 with the rule and with the communication address of storage system 72. Each endpoint applies the rule to the data items it produces. When a certain data item matches the rule, the endpoint regards it as a target data item that should be stored. The endpoint copies the target data item and forwards the copy to the communication address of the storage system. The storage system receives and stores the copies of the target data items forwarded from the different endpoints.

In the configuration of Fig. 2, signaling is carried out over a signaling path 80, and media transfer is carried out over a media path 84. The media path is different from the signaling path and does not pass through the RCS.

The configurations of Figs. 1 and 2 above are exemplary configurations, and any other suitable system configuration can also be used. For example, some systems may have hybrid configurations in which some endpoints communicate via a switch while others send traffic directly. The same RCS may configure both switches and endpoints, as necessary. In some embodiments, the data items exchanged between the endpoints may be captured by dedicated nodes, referred to as interceptors or sniffers. These nodes may apply the rule and cause the target data items to be forwarded to the storage system.

### DATA RECORDING METHOD DESCRIPTION

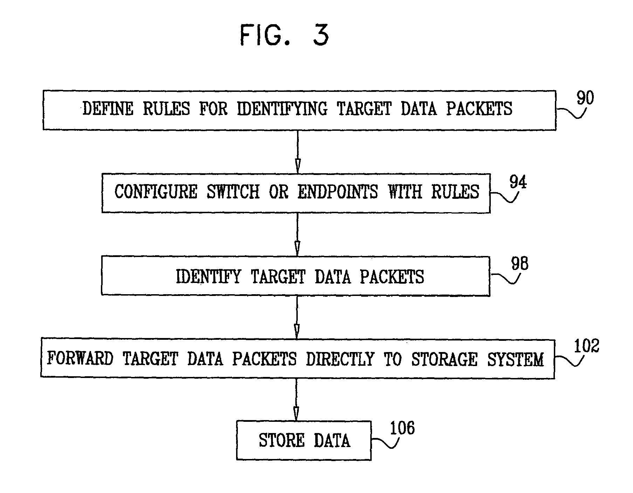

Fig. 3 is a flow chart that schematically illustrates a method for data recording, in accordance with an embodiment of the present disclosure. The method begins with the RCS defining (or accepting) rules for identifying target data items, at rule definition step 90. The RCS configures the switch and/or endpoints, as applicable, with the rules and with a communication address of the storage system, at a configuration step 94. The RCS may communicate with the switch or endpoints using any suitable signaling protocol, such as various proprietary vendor-specific protocols or the well-known Session Initiation Protocol (SIP).

As the endpoints communicate with one another, the switch and/or endpoints apply the rules to the data items they process in order to recognize the target data items, at a target identification step 98. When a switch or an endpoint recognizes a target data item, it forwards a copy of the identified data item to the storage system, at a forwarding step 102. The copy is forwarded to the communication address provided to the switch or endpoint at configuration step 94 above. The switch or endpoint can forward the copy to the storage system using any suitable media transfer protocol, such as the well-known Real Time Protocol (RTP). The storage system receives the forwarded copies of the target data items and stores them for subsequent use, at a storage step 106. The stored data items can later be retrieved from the storage system, such as by exchanging suitable recall commands with the storage system. In some embodiments, the RCS maintains information regarding sessions that were recorded by the storage system, and sessions or individual data items can later be retrieved from the storage system based on this information.

In some embodiments, the RCS configures the switch or endpoints with the rules, and the switch or endpoint are then capable of autonomously recognizing target data items. In other embodiments, the RCS continuously controls the switch or endpoints to recognize and forward the target data items. Typically, the rules may be modified and updated by a user, and the updates are propagated to the switch or endpoints by the RCS.

Although the embodiments described herein mainly address recording of data items in IP networks, the principles of the present disclosure can also be used for other applications and with other network types, such as Internetwork Packet Exchange (IPX) networks.

It will thus be appreciated that the embodiments described above are cited by way of example, and that the present disclosure is not limited to what has been particularly shown and described hereinabove. Rather, the scope of the present disclosure includes both combinations and sub-combinations of the various features described hereinabove, as well as variations and modifications thereof which would occur to persons skilled in the art upon reading the foregoing description and which are not disclosed in the prior art.

## Claims

1. A computer-implemented method for data recording, the method comprising defining a rule, said rule identifying data items exchanged between an originating endpoint (24) and a recipient endpoint (24) over a communication network, having nodes, as target data items for storage by a storage device (36), said storage device having a communication address; and the method **characterized by**:
configuring a node of said communication network with said rule and with said communication address of said storage device, wherein said rule causes said node to recognize said target data items while forwarding said data items between said originating and recipient endpoints and to forward respective copies of said recognized target data items to said communication address of said storage device.

2. The method according to claim 1, wherein said communication network comprises an Internet Protocol (IP) network.

3. The method according to claim 1, wherein configuring said node comprises communicating with said node over a first communication path in said communication network, and wherein said rule causes said node to forward said copies of said recognized target data items to said storage device over a second communication path in said communication network, different from said first communication path.

4. The method according to claim 1, wherein said node comprises said originating endpoint.

5. The method according to claim 1, wherein said rule operates on at least one information type selected from a group of types consisting of data content conveyed by said data items, metadata conveyed by said data items and a behavioral characteristic of said data items.

6. The method according to claim 1, and comprising storing said forwarded copies of said target data items in said storage device.

7. The method according to claim 6, wherein storing 6said forwarded copies comprises storing said copies in said storage device having the communication address without further forwarding said copies to another communication address.

8. The method according to claim 1, wherein configuring said node comprises causing said node to forward said copies without further processing of said copies by another node.

9. The method according to claim 1, wherein configuring said node comprises causing said node to filter said data items exchanged between said originating and recipient endpoints using said rule to identify said target data items.

10. The method according to claim 1, wherein configuring said node comprises causing said node to copy said recognized target data items to produce said respective copies.

11. The method according to claim 1, wherein configuring said node comprises causing said node to copy a portion of said recognized target data items.

12. Apparatus for data recording, comprising:
a network interface (44), which is arranged to communicate with a communication network; and
a processor (48), which is coupled to accept a definition of a rule, said rule identifying data items exchanged between an originating endpoint and a recipient endpoint over said communication network, having nodes, as target data items for storage by a storage device, said storage device having a communication address;
wherein the apparatus is **characterized by** the processor coupled to configure a node of said communication network with said rule and with said communication address of said storage device, wherein said rule causes said node to recognize said target data items while forwarding said data items between said originating and recipient endpoints and to forward respective copies of said recognized target data items to said communication address of said storage device.

13. The apparatus according to claim 12, wherein said communication network comprises an Internet Protocol (IP) network.

14. The apparatus according to claim 12, wherein said processor is coupled to cause said node to filter said data items exchanged between said originating and recipient endpoints using said rule to identify said target data items.

15. A system for data recording, comprising:
a storage device (72), which has a communication address and is coupled to receive copies of target data items that are exchanged over a communication network and to store said received copies; and
a Recording Control System (RCS) (76), which is coupled to accept a definition of a rule, said rule identifying data items exchanged between an originating endpoint and a recipient endpoint over said communication network, having nodes, as target data items for storage by said storage device;
wherein the system is further **characterized by** the RCS further coupled to configure a node of said communication network with said rule and with said communication address of said storage device, wherein said rule causes said node to recognize said target data items while forwarding said data items between said originating and recipient endpoints and to forward respective copies of said recognized target data items to said communication address of said storage device.
